# EUROPEAN PATENT APPLICATION

(11) **EP 2 557 670 A2**
(43) Date of publication of application: **13.02.2013**
(21) Application number: 12178321.1
(22) Date of filing: 27.07.2012
(51) Int. Cl.: H02M 1/32, H02M 1/42, B64D 41/00

(54) **AC/DC power converter with multiple dc outputs for aircraft applications**

(30) Priority: 29.07.2011 GB 201113078
(71) Applicant: Wessex Advanced Switching Products Limited, Portsmouth, Hampshire PO9 1QY (GB)
(72) Inventor: Savage, Clive Peter, Lee on Solent, Hampshire PO13 8LL (GB); Hildyard, Graham Nigel, Eastleigh, Hampshire SO53 3RS (GB)
(74) Representative: Locke, Andrew Robert

(57) **Abstract**

An aircraft interior power converter (1) comprises a housing (3) for mounting in or at an aircraft seat, the housing (3) being provided with an AC input connector (5) for connection to an AC input power supply (10) from the aircraft, multiple DC outlets (7) each providing a DC output power supply for connection to electronic equipment and/or lighting in the aircraft interior, and electronic circuitry (9). The circuitry (9) comprises a primary power converter (13) operative to convert the AC input power supply (10) to a primary DC output power supply, the circuitry (9) further comprising a regulator (15) for at least one of the DC output voltages required, the or each regulator (15) being operative to receive the primary DC output power supply and generate a DC input power supply at the voltage required for the particular DC outlet (7) connected to that regulator (15). A respective output protection circuit (17) is provided for each DC outlet (7) and is operative to receive a DC input voltage from at least one of the primary DC output power supply and a respective regulator (15), each output protection circuit (17) comprising a comparator circuit (27) operative to generate a load signal indicative of the electrical load being taken by that DC outlet (7), to compare that load signal against a predetermined load limit, and to generate an output control signal operative to disconnect the DC input voltage from the DC outlet (7) if the load signal exceeds the predetermined load limit.

## Description

The present invention relates to an aircraft interior power converter operative to convert a primary input AC aircraft power into multiple DC outputs at or adjacent an aircraft seat.

An aircraft typically generates a primary input power supply of around 110V AC at 400Hz. This primary AC input supply is fed to the interior of the aircraft and is stepped down and converted into a DC output supply for powering electronic equipment and lighting in the aircraft interior.

Increasingly, DC power output connectors are required at or adjacent the aircraft seats, and preferably multiple DC outlets are required to be provided as the number of electronic devices, and/or lighting at each seat increases. Such DC outlets are provided for passengers to plug in their own personal electronic equipment, such as electronic music devices, computers, personal DVD players or the like. The DC outlets may also be required to power lighting at or on the seat.

Various power converters have been previously proposed, but these are typically integrated with onboard data/entertainment systems, and connected to and controlled by a separate electronic controller or controllers in the aircraft.

There is a need to provide a power converter to provide multiple DC outlets, of a size suitable for mounting discretely in or at an aircraft seat, that provides robust, fail safe, independent operation.

According to a first aspect of the invention there is provided An aircraft interior power converter comprising a housing for mounting in or at an aircraft seat, the housing being provided with an AC input connector for connection to an AC input power supply from the aircraft, multiple DC outlets each providing a DC output power supply for connection to electronic equipment and/or lighting in the aircraft interior, and electronic circuitry comprising a primary power converter operative to convert the AC input power supply to a primary DC output power supply , the circuitry comprising a regulator for at least one of the DC output voltages required, the or each regulator being operative to receive the primary DC output power supply and generate a DC input power supply at the voltage required for the particular DC outlet connected to that regulator, a respective output protection circuit being provided for each DC outlet and operative to receive a DC input voltage from at least one of the primary DC output power supply and a respective regulator, each output protection circuit comprising a comparator circuit operative to generate a load signal indicative of the electrical load being taken by that DC outlet, to compare that load signal against a predetermined load limit, and to generate an output control signal operative to disconnect the DC input voltage from the DC outlet if the load signal exceeds the predetermined load limit.

The primary power converter may comprise a power factor correcting converter in series with a step-down converter, the power factor correcting converter 13A converting the AC input power supply into a converted DC output power supply which is then stepped down by the step-down converter into the primary DC output supply voltage.

The output protection circuit for at least one DC outlet preferably receives power directly from the step-down converter, at least another output protection circuit receiving power from a regulator.

Preferably a regulator is provided for each DC output voltage required.

Preferably the output protection circuit comprises a current sense circuit operative to generate the load signal comprising a current sense voltage proportional to the current being taken by the load, and the comparator circuit operative to compare the current sense voltage to the predetermined load limit.

Preferably the comparator output control signal is operative to control a trigger circuit that switches the connection between the DC output power supply and the DC outlet on and off in response to the output control signal.

Preferably the trigger circuit is operative to control a monostable timing circuit operative to reset the trigger circuit after a predetermined time period.

Preferably the trigger circuit is operative to generate a time delay between receiving the output control signal from the comparator circuit indicative of an overload, and switching off the connection between the DC output power supply and the DC outlet.

Preferably the primary power converter incorporates overload protection operative to disconnect the primary AC input power supply from the primary DC output power supply in the event of an overload.

Preferably the regulators incorporate overload protection operative to disconnect the primary DC output power supply from the DC output power supply in the event of an overload.

Preferably each switch device, that is, the current sense circuit, comparator circuit and the trigger circuit in the output protection circuit each incorporates its own independent overload protection.

According to a second aspect of the invention there is provided an aircraft comprising a power converter of the first aspect of the invention.

According to a third aspect of the invention there is provided an aircraft seat comprising a power converter of the first aspect of the invention.

Other aspects of the present invention may include any combination of the features or limitations referred to herein.

The present invention may be carried into practice in various ways, but embodiments will now be described by way of example only with reference to the accompanying drawings in which:

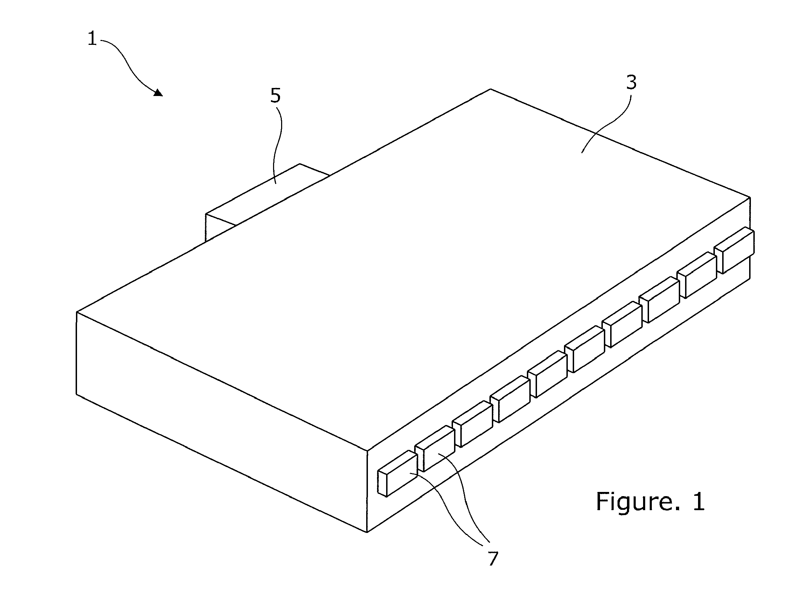

**Figure 1** is a perspective view of an aircraft interior power converter in accordance with the present invention;

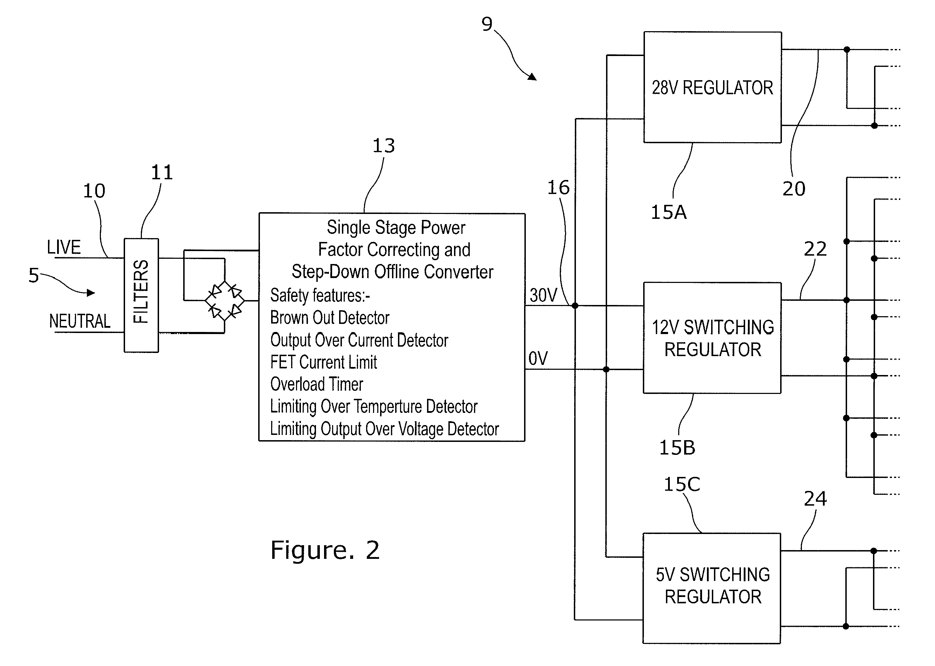

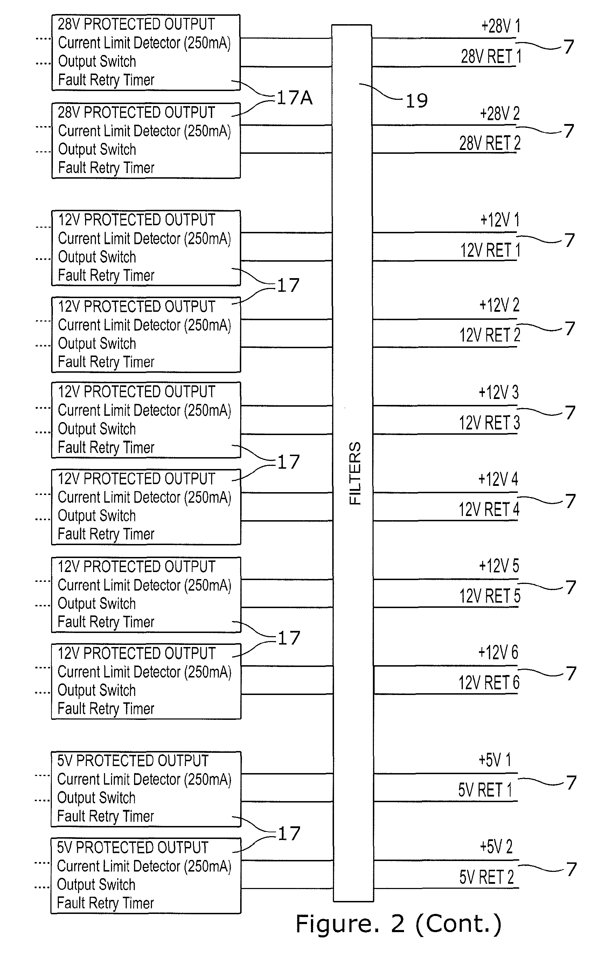

**Figure 2** is a schematic circuit diagram of an aircraft interior power converter in accordance with the present invention;
**Figure 3** is a schematic circuit diagram of an output protection circuit comprising part of the power converter of Figures 1 and 2; and
**Figure 4** is a schematic circuit diagram of another aircraft interior power converter in accordance with the present invention;

Referring to the Figures, an aircraft interior power converter 1 comprises a housing 3 provided with an AC input connector 5, and a plurality of DC outlets 7. Electronic circuitry 9 is contained inside the housing 3 and is operative to convert an input AC power supply to a DC output power supply.

The AC input connector 5 is of any type suitable to electrically connect the power converter 1 to the primary AC input power supply 10 generated by the aircraft engines, this AC input power supply 10 typically being 110V AC at 400Hz.

Each DC outlet 7 is of any type suitable to provide a suitable DC output power supply to a desired electrical or lighting device. One or more of the DC outlets 7 may therefore comprise a socket type connector for plugging in a personal computer, mobile telephone, mobile music player or any other desired electrical device. One or more of the DC outlets 7 may comprise a USB type connector. Any other suitable type of connector is envisaged. One or more DC outlets 7 may comprise a permanent fixed connection for a light or lights provided at or adjacent a seat of the aircraft for example.

In this non limiting example there are ten DC outlets 7, two at 28V DC, six at 12V DC and two at 5V DC. However, any desired number of DC outlets 7 can be provided as required, at any combination of the above or any other required output voltage level.

The electronic circuitry 9 contains various circuits which together form an independent autonomous unit not requiring, and indeed actively avoiding the need for, any external control input, or any data or control connection to an external controller.

The circuitry 9 comprises primary input filters 11, a primary power converter 13, a plurality of regulators 15, one for each DC output voltage level required, a plurality of output protection circuits 17, one for each DC outlet 7, and output filters 19.

The AC input power supply 10 from the aircraft engines passes through the primary filters 11 and into the primary power converter 13 which converts the AC input power supply 10 into a primary DC output power supply 16 and also steps down the voltage. In this example, a 110V 400Hz AC input supply is converted and stepped down into a 30V DC primary output supply 16.

The power converter 13 comprises various independent safety features including a brown out detector (which monitors and compares the AC supply level voltage to a fixed trigger level), an output overcurrent detector, and a FET (field effect transistor) current limit. These are all designed to disconnect the AC input supply 10 from the remainder of the circuitry 9 in the event that either the AC input supply 10, or the converted stepped down primary DC output supply 16, reaches a potentially dangerous level.

In the event that any of the above detectors detects a fault, an appropriate disconnect signal is generated operative to disconnect the AC input power supply 10.

The power converter 13 also incorporates power factor correction operative to attenuate differences between the real power (ie the capacity of the circuit) and the apparent power of the circuit.

The power converter 13 also includes, in this example, a 1A circuit breaker, a 2.5A slow blow fuse, and two levels of input over voltage protection using a 140V AC varistor in the AC input circuit, and a 220V DC transient voltage suppressor in the primary DC circuit.

The 30V DC primary output supply 16 from the power converter 13 is input to the regulators 15 each of which steps down the 30V DC primary output supply 16 into multiple DC output power supplies at the levels required for the particular DC outlets 7. In this example there is a linear regulator 15A, providing a 28V DC input supply 20, and two switching regulators 15B, 15C, one of which provides a 12V DC input supply 22, and the other of which provides a 5V DC input supply 24.

Each regulator 15 has built in over current protection and thermal overload shutdown.

The DC input supplies 20, 22, 24 are input to respective output protection circuits 17. An output protection circuit 17 is provided for each DC outlet 7 so that in this example there are ten circuits 17, two at 28V, six at 12V, and two at 5V.

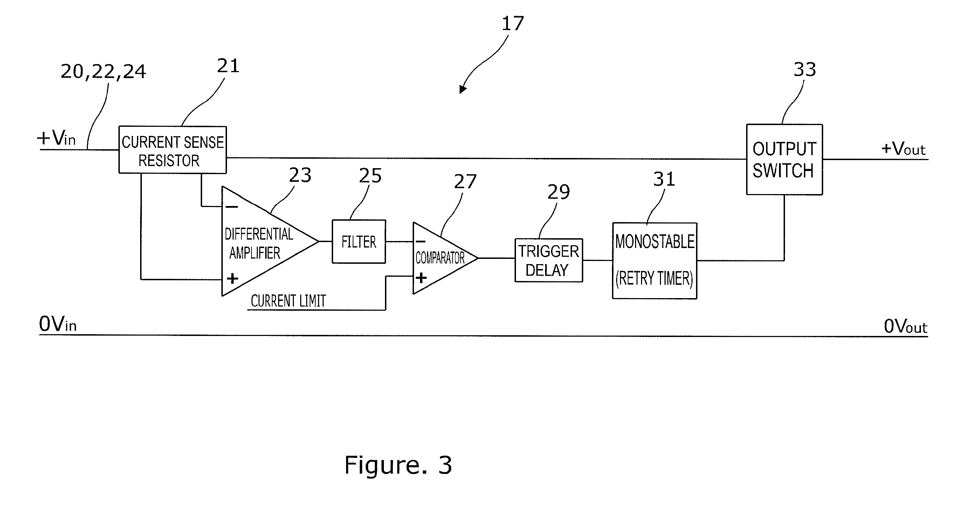

Referring in particular to Figure 3, each output protection circuit 17 comprises various components arranged to measure the load being drawn by the respective DC outlet 7, to compare that measured load with a predetermined load limit, to disconnect the load from the supply if the measured load exceeds the predetermined load limit, and then to attempt to reconnect the load to the supply after a predetermined time period.

Thus, each output protection circuit 19 comprises a current sense resistor 21 and a differential amplifier 23 arranged to generate a load signal comprising a current sense voltage proportional to the current being taken by the load attached to the given DC outlet 7. The current sense voltage passes through filter 25 to a comparator circuit 27 which compares the current sense voltage to a predetermined reference voltage load limit. The comparator circuit 27 generates an output comprising an output control signal operative to switch if the current sense voltage exceeds the preset limit, ie if the current taken by the load exceeds the predetermined load limit.

Once switched, the comparator circuit 27 output is used to trigger, via trigger circuit 29, a monostable timing circuit 3 which disconnects the load from the DC voltage supply via output switch 33, ie disconnects the DC outlet 7 from the DC input voltage supply 20, 22, 24 from the appropriate regulator 17. The trigger circuit 29 is configured to provide a preset time delay to delay switching the output off for a short time. The trigger circuit 29 is thus arranged to account for the load exceeding the preset reference voltage limit for a transient period only, as might occur because of the high inrush currents associated with some loads.

Once the load is disconnected, the monostable timing circuit 31 resets after a predetermined time, and the DC input supply 20, 22, 24 is reconnected to the DC outlet 7, via output switch 33. If the overload condition is still present, the monostable timing circuit is triggered again and supply is switched off. The process repeats until the overload is removed.

The individual output protection circuits 17 function entirely independently from all of the other output protection circuits 17 and hence a fault on one DC outlet 7 will not affect any other DC outlet 7.

Each DC outlet 7 is thus current limited by the respective output protection circuit 17.

Each DC outlet 7 is also provided with transient suppression diodes to protect against voltage transients and incorrect connection.

In addition each switch device used in the output protection circuit 17 has under voltage shutdown, overvoltage clamp, load current limitation, self limiting of thermal transients, protection against loss of grounds or loss of Vcc, and thermal shutdown.

The power converter 1 thus provides a plurality of independent DC voltage output supplies from a single AC voltage input supply from the aircraft, in a relatively small, self-contained unit that can easily and discretely be located in an aircraft seat, or adjacent the seat in the floor, or seat arm for example. The converter is independent from all other aircraft systems and requires no data or control connection, and indeed is designed so that it cannot be controlled externally. The converter 1 is entirely circuit driven, rather than software or processor driven.

The converter 1 incorporates layers of independent safety protection in the main parts of the circuitry 9 so that each part of the circuitry 9 can shut down, ie disconnect the input supply from the output at that part of the circuitry, independently of the other parts of the circuitry 9.

Thus, the primary step down power converter 13 incorporates safety overload shutdown features operative to shutdown the power converter 13 in the event of a potentially dangerous overload situation.

Likewise the regulators 15, independently of the power converter 13, incorporate safety overload shut down features.

Each output protection circuit 17 incorporates independent overload protection, and the ability to retry the connection, entirely independently of the other output protection circuits 17. Thus, the converter 1 can disconnect one or more DC outlets 7 whilst maintaining the supply to the other output connectors 7, all without requiring external or processor based control.

It is envisaged that the converter 1 be operative to convert any required aircraft AC primary input voltage and/or frequency. For example the converter 1 described above is capable of converting an AC primary input from 360Hz to 800Hz, if required.

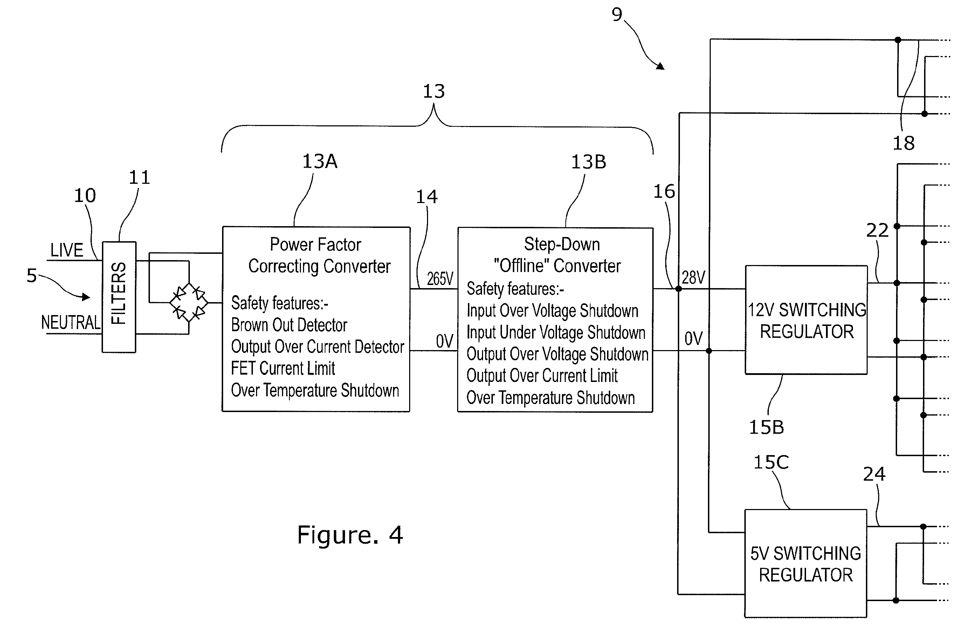

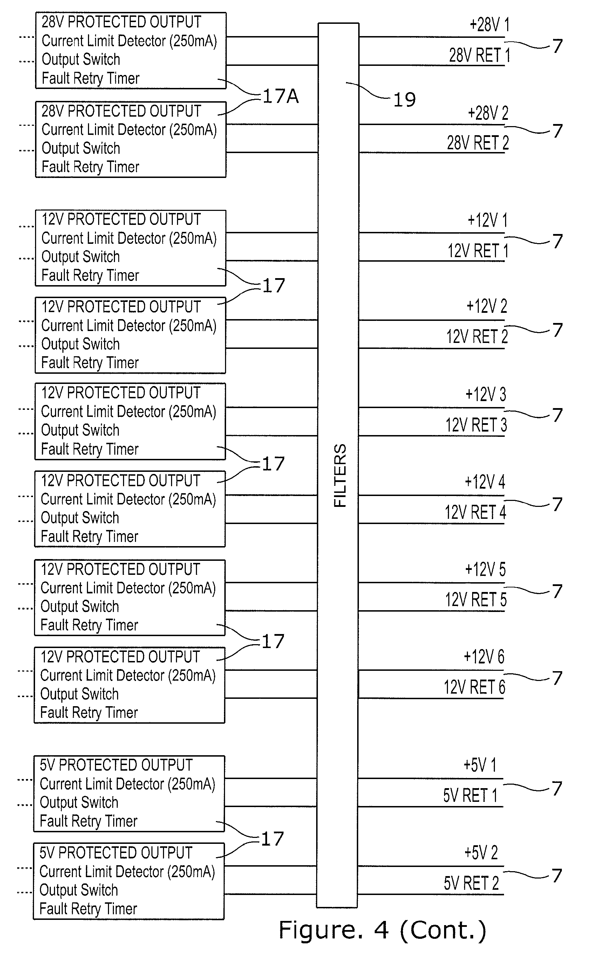

Referring additionally to Figure 4, the converter 1 may be provided with modified circuitry 9B. The modified circuitry 9B comprises similar features to circuitry 9 described above, and therefore comprises primary input filters 11, a plurality of regulators 15, a plurality of output protection circuits 17, one for each DC outlet 7, and output filters 19.

In this example, the primary power converter 13 comprises two separate components: a power factor correcting converter 13A, in series with a step-down offline converter 13B.

The AC input power supply 10 from the aircraft engines passes through the primary filters 11 and into the power factor correcting converter 13A which converts the AC input power supply into a converted DC output power supply 14. In this example, a 110V 400Hz AC input supply is converted into a 265V DC converted output supply 14.

The converted DC output supply 14 from the power factor correcting converter 13A is then stepped down by the step-down offline converter 13B into a lower primary DC output supply voltage 16, in this example, at 28V.

The power factor correcting converter 13A comprises various independent safety features including a brown out detector (which monitors and compares the AC supply level voltage to a fixed trigger level), an output over-current detector, and a FET (field effect transistor) current limit. The step-down offline converter 13B incorporates input over-voltage shutdown, input under-voltage shutdown, output over-voltage shutdown, output over-current limit and over-temperature shut down. These are all designed to disconnect the AC input supply from the remainder of the circuitry 9 in the event that either the AC input supply, or the converted DC output or the stepped down primary DC output supply, reaches a potentially dangerous level. The power factor correcting converter 13A and the step-down offline converter 13B incorporate independent protection, and can therefore shut down independently of the other.

In this example, the switching regulator 15A for the28V output protection circuits 17A is omitted. The 28V DC primary output supply 16 from the step-down offline converter 13B is input 18 in this example directly to the two output protection circuits 17A that are of matching voltage. The DC input supply 18 to these two DC outlets 7 thus matches the primary output supply 16 from the step-down offline converter 13B.

The 28V DC primary output supply 16 from the step-down offline converter 13B is also input to the regulators 15B, 15C each of which steps down the 28V DC primary output supply 16 into DC input power supplies 22, 24 at the levels required for the particular DC outlets 7. So, in this example there is a 28V DC input supply 18 provided directly from the step-down offline converter 13B, and two switching regulators 15B, 15C, one of which provides a 12V DC input supply 22, and the other of which provides a 5V DC input supply 24.

Each regulator 15B, 15C has built in over current protection and thermal overload shutdown.

The DC input supplies 18, 22, 24 are input to respective output protection circuits 17 as described above with reference to circuitry 9. An output protection circuit 17 is provided for each DC outlet 7 so that in this example there are ten circuits 17, two at 28V, six at 12V, and two at 5V.

## Claims

1. An aircraft interior power converter comprising a housing for mounting in or at an aircraft seat, the housing being provided with an AC input connector for connection to an AC input power supply from the aircraft, multiple DC outlets each providing a DC output power supply for connection to electronic equipment and/or lighting in the aircraft interior, and electronic circuitry comprising a primary power converter operative to convert the AC input power supply to a primary DC output power supply , the circuitry comprising a regulator for at least one of the DC output voltages required, the or each regulator being operative to receive the primary DC output power supply and generate a DC input power supply at the voltage required for the particular DC outlet connected to that regulator, a respective output protection circuit being provided for each DC outlet and operative to receive a DC input voltage from at least one of the primary DC output power supply and a respective regulator, each output protection circuit comprising a comparator circuit operative to generate a load signal indicative of the electrical load being taken by that DC outlet, to compare that load signal against a predetermined load limit, and to generate an output control signal operative to disconnect the DC input voltage from the DC outlet if the load signal exceeds the predetermined load limit.

2. The aircraft power converter of claim 1 wherein the primary power converter comprises a power factor correcting converter in series with a step-down converter, the power factor correcting converter 13A converting the AC input power supply into a converted DC output power supply which is then stepped down by the step-down converter into the primary DC output supply voltage.

3. The aircraft power converter of claim 2 wherein the output protection circuit for at least one DC outlet receives power directly from the step-down converter, at least another output protection circuit receiving power from a regulator.

4. The aircraft power converter of claim 1 wherein a regulator is provided for each DC output voltage required.

5. The aircraft interior power converter of any one of the preceding claims wherein the output protection circuit comprises a current sense circuit operative to generate the load signal comprising a current sense voltage proportional to the current being taken by the load, and the comparator circuit operative to compare the current sense voltage to the predetermined load limit.

6. The aircraft interior power converter of any one of the preceding claims wherein the comparator output control signal is operative to control a trigger circuit that switches the connection between the DC output power supply to the DC outlet on and off in response to the output control signal.

7. The aircraft interior power converter of claim 6 wherein the trigger circuit is operative to control a monostable timing circuit operative to reset the trigger circuit after a predetermined time period.

8. The aircraft interior power converter of claim 6 or claim 7 wherein the trigger circuit is operative to generate a time delay between receiving the output control signal from the comparator circuit indicative of an overload, and switching off the connection between the DC output power supply and to the DC outlet.

9. The aircraft interior power converter of any one of the preceding claims wherein the primary power converter incorporates overload protection operative to disconnect the primary AC input power supply from the primary DC output power supply in the event of an overload.

10. The aircraft interior power converter of any one of the preceding claims wherein the regulators incorporate overload protection operative to disconnect the primary DC output power supply from the DC output power supply in the event of an overload.

11. The aircraft interior power converter of any one of the preceding claims wherein each switch device, that is, the current sense circuit, comparator circuit and the trigger circuit, in the output protection circuit each incorporates its own independent overload protection.

12. An aircraft comprising a power converter of any one of claims 1 to 11.

13. An aircraft seat comprising a power converter of any one of claims 1 to 11.
